# EUROPÄISCHE PATENTSCHRIFT

(11) **EP 0 942 178 B1**
(45) Veröffentlichungstag und Bekanntmachung des Hinweises auf die Patenterteilung: **22.09.2004**
(21) Anmeldenummer: 99250012.4
(22) Anmeldetag: 15.01.1999
(51) Int. Cl.: F16B 13/14

(54) **Einrichtung zur selbsthaltenden Verankerung von Bauelementen**
Device for the self-locking anchorage of building elements
Dispositif pour l'ancrage autobloquant d'éléments de construction

(30) Priorität: 16.01.1998 DE 19802185
(43) Veröffentlichungstag der Anmeldung: 15.09.1999
(73) Patentinhaber: Pannach, Jürgen, 12277 Berlin (DE)
(72) Erfinder: Pannach, Jürgen, 12277 Berlin (DE)

(56) Entgegenhaltungen:
- EP-A- 0 661 463
- DE-A- 3 304 071
- FR-A- 2 675 218
- GB-A- 1 382 054

## Beschreibung

Die Erfindung betrifft eine Einrichtung zum selbsthaltenden Verankern von Bauelementen in dafür vorgesehene Aufnahmeöffnungen, die mittels Einführen des Verankerungselementes in die Aufnahmeöffnung in eine Verankerungsposition gebracht und in der Öffnung sich mit den Wänden der Aufnahmeöffnung zur Aufnahme horizontal und vertikal wirkender Kräfte schlüssig verbindet.

Es ist bekannt, Elemente in Bohrungen bzw. Öffnungen fester Körper, insbesondere Bauwerkskörpern, einzufügen und mit anderen Körpern zu verbinden. Die Verbindung zwischen dem Halteelement sowie dem belastenden Element verursacht Zug-, Scherkräfte und Momente, die in das Element einzutragen sind. Dafür ist es üblich, als Halteelement Dübel zu verwenden und durch einzufügende Elemente, wie Schrauben, Spreizniete u.ä. Elemente, die sich an deren Wandung anpressen und zwischen dem einfügenden Element und der Wandung der Öffnung eine kraftschlüssige Verbindung herzustellen.

Der einzuführende Anker hat einen sich nach oben vergrößernden Querschnitt und verursacht leichte Deformierungen des Dübels, wenn die Wände der Öffnungen nicht glatt zylindrisch, sondern uneben sind. Das Material des Dübels kann jedoch nicht unbegrenzt verformt werden. Seine Verformung ist von der radialen Ausdehnung des einzuführenden Spreizelementes sowie von der Materialart des Dübels abhängig. Die so entstehende formschlüssige Verbindung ist nur graduiert möglich. Es kann bei nicht ausreichendem Eindrücken in die Oberflächenkontur der Öffnungen zu einer unvollständigen Verbindung zwischen Dübelaußenwand und Bohrung kommen und die kraftschlüssige Verbindung reicht nicht aus, um den Belastungen des zu haltenden Elementes zu entsprechen. Insbesondere dann, wenn die Verbindung Halteelement zu Belastungselement groß ist, also große Lasten zu übertragen und Kräfte aufzunehmen sind, ist eine derartige Verbindung schon durch ihre Dimensionierung der Wirkelemente, wie Hülse bzw. Dübel und Spreizelement, Schraube oder Spreizniet, unzureichend. Des weiteren sind bei einer Verwendung großformatiger Halteelemente, die in entsprechend große Öffnungen einzufügen sind, die mechanischen Kräfte sehr hoch, um die Bewegungsteile zum Spreizen zu bringen und eine vollständige kraftschlüssige Verbindung herzustellen, die den Belastungsanforderungen genügt. Das trifft besonders dann zu, wenn eine Verankerung von Bauelementen mittels entsprechend großdimensionierter Verankerungselemente erfolgen soll. Diese Elemente sind oftmals in natürlich gewachsenem Boden oder in vorbereitete Zementblasen, die in dem Boden eingefügt sind, einzubringen. Hier ist es schwierig, einen Kraftschluß zwischen der Basis, dem Halteelement und dem Baukörper, der gehalten werden soll, herzustellen. Eine ähnliche Situation ist anzutreffen, wenn eine Verbindung von Baukörpern mit festen, sehr harten Basiskörpern, wie Felsen, Gesteinen u.ä., hergestellt werden soll, wie es beispielsweise bei der Verankerung von Seilbahnen in Gebirgen erfolgen muß. Erschwerend ist noch, daß die Verankerung an nicht einfach zugänglichen Stellen zu erfolgen hat und die zwangsläufig großformatigen Verbindungselemente nicht einfach zu bewegen sind. Weiterhin erschwerend ist dabei festzustellen, daß die Öffnungen für das Einführen der Halteelemente nicht glattwandig und ebenformatig sind. Eine Verbindung Bauwerksteil-Halteelement-Anker ist bei solchen Bedingungen nur unzureichend mit den bekannten Mitteln herstellbar.

Die DE A1 26 25 492 offenbart eine Anordnung zum Befestigen eines Dübels. Gemäß der Schrift ist zwischen der Innenwand des Dübellochs und einem eingeführten Dübel eine Kunstharzschicht eingeordnet. Nach Aushärten des Kunstharzes ist der Dübel in der Bohrung eingeklebt und fest verankert. Die Lösung hat den Nachteil, daß das Einbringen der Klebemasse sehr kompliziert ist. Die DE 195 52 712 A1 offenbart eine Mörtelpatrone. Die Patrone wird in eine genau herzustellende Bohrung eingeführt und ist mit einem Kunststoffmörtel gefüllt. Sie ist an ihrer oberen Seite verschlossen. Das Verschlußteil dazu trägt eine Führung zum Einsetzen eines Ankers, der zwischen Führungsrippen zentriert, axial in der Patrone geführt ist. Durch den Druck des Mörtels, der beim Einführen des Ankers steigt, wird die Patronenwand an die Bohrungswand gepreßt und stellt eine kraftschlüssige Verbindung zwischen den Wänden her. Die erfindungsgemäße Lösung ist dadurch nachteilig, daß die aufnehmbaren Kräfte sehr gering sind.

Die DE A1 22 22 013 offenbart eine Zweikomponentenkleberpatrone. Die Patrone wird in ein Bohrloch eingeführt und weist an ihrer inneren Wand wendelartige Nuten auf. In den Hohlraum der Patrone ist einer mit dünnem Kunststoff ummantelter Behälter eingelegt, in dem miteinander reagierende Chemikalien enthalten sind. Bei Einbringen des Ankers in die Patrone wird der Behälter zerstört, die Chemikalien zur Reaktion gebracht und der Anker in der Patrone festgehalten. Durch den Druck des in die Wendel eingeschraubten Ankers werden die reagierenden Chemikalien verdrängt, der Druck in der Patrone erhöht und zwischen Außenwand und Bohrungsinnenwand eine kraftschlüssige Verbindung hergestellt. Die Art der Verbindung ist aufwending und durch ihre mehrteilige Anordnung auch unübersichtlich.

Einer ähnlichen, dazu fast gleichartigen Anordnung folgt die Lösung der EP 661 463 A1. Die Schrift gibt einen Verbundanker, bestehend aus einer Ankerstange und einer durch die Ankerstange zerstörbaren Patrone an, wobei ein Innenbehälter einen über die Länge der Patrone verteilt angeordneten, voneinander abgegrenzten und beim Eintreiben der Ankerstange nacheinander zerstörbaren Innenbehälter aufweist. Die einzelnen Abschnitte weisen unterschiedliche Volumina auf und sind so ausgestaltet, daß sie von den Enden des Innenbehälters zur Mitte hin nacheinander zerbrechen und das in dem jeweiligen Innenbehälter befindliche Wasser an die Umgebung abgeben. Dadurch wird der Eintreibund Durchmischungsvorgang sowie eine bessere Befestigung erreicht. Die erfindungsgemäße Lösung hat den Nachteil, daß es sich bei einem Haltemedium um ein Trockenmedium handelt, das erst durch den Zusatz und die Vermischung mit Wasser zu einer bestimmten Pastösität und späteren Festigkeit reagiert. Es ist nicht sicher, daß die Durchmischung ausreichend erfolgt und zwischen den Bohrungswänden und den Wänden des Ankers eine ausreichende Verbindung herzustellen ist.

Die DE 27 05 484 A1 offenbart eine Ankerbefestigung mit einer Zweikompomentenkleberpatrone. Die Ankerbefestigung besteht aus einer Innen- sowie Außenampulle, in der die jeweilige Komponente eines Zweikomponentenklebers voneinander separat getrennt enthalten ist. Mit diesem Kleber soll ein Anker in einem Bohrloch befestigt werden. Im Kleber sind Quarzsande als Füllstoff enthalten. Die Härterkomponente und der Füllstoff, ursprünglich in einem getrennten Raum angebracht, in Verbindung gesetzt, reagieren aushärtend und verbinden den Anker mit der äußeren Bohrung. Eine dieser ähnlichen Lösung offenbart die EP 597 217 A1. Hier besteht die Patrone mit tixotropen Stoffen aus Glas.

Die DE 32 02 541 A1 stellt einen Injektionsanker zum Einsetzen in eine Bauwerksbohrung, die anschließend durch einen sich über die gesamte Länge des Ankers erstreckenden Kanal mit einer sich aushärtenden Füllmasse verpreßt wird, vor. Der Anker weist eine sich durchgehend erstreckende, kammerbildende Trennwand sowie einen Verschlußstopfen zum Abschluß der Bohrung auf. Um die Verteilung der Füllmasse in der Bohrung und damit den Sitz des Ankers zu verbessern, weist die Trennwand ein im Querschnitt S-förmiges Profil auf und ist in ein gleichförmig ausgebildeten Mulden eingelegt und mit der Füllmasse in Verbindung gebracht. Ein Nachteil der erfindungsgemäßen Lösung ist darin zu sehen, daß die aushärtende Füllmasse wohl die Bohrungswand und den Anker verbindet, jedoch nach Einsetzen des Ankers in die Bohrung separat nachgepreßt werden muß. Gleichzeitig ist der Grad der Ausfüllung des Hohlraumes der Bohrung erst dann festzustellen, wenn die Füllmasse an einer Austrittsöffnung sichtbar austritt.

Die EP 0 251 999 A1 offenbart eine mittels aushärtbaren Massen verankerbare Ankerstange. Bei dieser Lösung wird die Ankerstange in eine aushärtende Masse gedrückt, die in eine Bohrung bereits eingefügt ist und durch die Ankerstange unter Druck gesetzt, die Zwischenräume Ankerstange und Bohrungsinnenwand ausfüllt und die Einrichtungsteile nach einem Erhärten formschlüssig verbindet. Der Formschluß wird dadurch noch verbessert, daß im oberen Bereich der Ankerstange eine Hinterschneidung vorhanden ist, die durch die Masse ausgefüllt, einen zusätzlichen Festigkeitseffekt erreichen läßt.

Einen hülsenförmigen Dübelkörper stellt die DE 35 35 251 A1 vor, der aus einer oder mehreren Schafthülsen besteht, die in einer gewünschten Länge zusammengesteckt sind. Die rückwärtige Schafthülse weist dabei ein Kopfstück auf und zentriert die Hülse und den später einzuführenden Anker. Ein Verschlußstück ist am Boden eingeordnet und verhindert ein unkontrolliertes Verlassen der Füllstoffe nach unten aus dem Dübel. Der Dübelkörper ermöglicht eine optimale Kontrolle des Verfüllungsgrades mit dem Füllstoff und das Vermeiden von Fehlmanipulationen. Durch die gitterartige Ausbildung des Dübelkörpers ist es möglich, daß der Füllstoff, den Dübelkörper durchdringend, sich mit der Innenwand der Bohrung intensiv verbinden kann.

Einen für den Einsatz als Anker bestimmten Gewindebolzen weist die DE 37 27 154 A1 auf. Gemäß dieser Schrift ist ein Gewindebolzen für eine formschlüssige Verankerung vorgestellt, der eine Hinterschnittfläche bildende Erweiterung aufweist. Der Gewindebolzen hat an der Verankerungsstelle Erweiterungen in der Art hervortretender schaufelartiger Ansätze, die sich in einer Hinterschneidung der Bohrung verhaken. Die schaufelartigen Ansätze sind elastisch und passen sich beim Einführen des Ankers in die engere Bohrung an und dehnen sich in der Hinterschneidung entsprechend aus. Kompliziert ist entsprechend dieser Lösung das Herstellen der Hinterschneidung in dem ankertragenden Bohrloch.

Die FR A 2 675 218 offenbart ein Verfahren und eine Einrichtung zum Fixieren von Halteeinrichtungen in einer Bohrung, auf deren Sohle eine Kapsel gelagert ist, die von den dübelartigen Einrichtungen bei ihrem Einschieben in die Bohruniz geöffnet und entleert wird. Die ausfließenden Chemikalien, hier ein Kunstharz und ein Härter, gelangen zwischen die Wände der Bohrung der der Einrichtung, welche sie aushärtend verbinden.

Eine für mehrere gemäß im Stand der Technik genannten Lösungen verwendbare Patrone oder Kartusche für die chemische Befestigungstechnik stellt die DE 41 31 457 A1 vor. Die Patrone ist als Außen- oder Innenpatrone verwendbar und enthält eine Zweikomponentenklebemasse eines radikalisch härtbaren Kunstharzes und ein räumlich davon getrenntes Härtemittel für den Kunstharz. Die Patrone wird verschlossen, in ein Bohrloch eingesetzt, eine Ankerstange in das Bohrloch getrieben, wobei die Wände der Patrone zerstört, das Harz in die Hohlräume zwischen Ankerwand und Bohrung eindringt, nach drei bis vier Minuten geliert und nach einer Gesamthärtungszeit von dreißig Minuten eine Festigkeit von 100 kN aufweist.

Der Erfindung liegt die Aufgabe zugrunde, eine Einrichtung zum selbsthaltenden Verankern von Bauelementen in dafür vorgesehene Aufnahmeöffnungen, die mittels Einführen des Verankerungselementes in die Aufnahmeöffnung in eine Verankerungsposition gebracht und in der Öffnung sich mit den Wandungen der Aufnahmeöffnung zur Aufnahme von horizontal und vertikal wirkenden Kräften schlüssig verbindet, zu schaffen, die es ermöglicht, eine ganzflächige, selbstorganisierende Verbindung zwischen Halteelement und Wandung der Öffnung zur Aufnahme von großen Kräften komplex zu ermöglichen, und den mechanischen Aufwand zur Herstellung der Verbindung Bau- und Halteelement und Basiskörper zu verringern.

Erfindungsgemäß wird die Aufgabe durch eine Einrichtung nach Anspruch 1 gelöst.

Die Reaktionsmittel werden zum Ausbilden von partiellen Auskolkungen der Hohlräume, in denen die Ankerkapsel eingeführt und bereits fest verankert ist, zum Einsatz gebracht. In die Auskolkungen der Hohlräume gelangen die Chemikalien, härten dort aus und gewährleisten durch ihre Verdickung eine erhöhte formschlüssige Verbindung der Ankerkapsel im Hohlraum.

Die Erfindung ist sinnvoll gestaltet, wenn Schneidmittel, sich radial gegenüberliegend, auf dem Schaft des Ankers angeordnet, fahnenartig herausstehend, keilförmig ausgebildet, mit der Trennschneide dem Keilverlauf folgend nach außen verlaufend, mit ihrer Erstreckung die radiale Erstreckung der Trennwand überragend, vorgesehen sind. Eine vorteilhafte Ausgestaltung erhält die Erfindung dadurch, daß die Länge des Ankers mit der inneren Länge der Ankerkapsel gleich ist, und der Flansch des Ankers einen größeren Durchmesser als die äußere Außenerstreckung der Ankerkapsel aufweist. Eine Ausbildungsform der Erfindung ist dadurch gegeben, daß die Sollbruchstellen gegenüber der Wandstärke der Außenwand der Ankerkapsel eine Verdünnung auf 0,01 bis 0,5 mm erhält und in vertikalen und radialen Abständen verteilt, in der Ankerkapsel eingeordnet sind. Der Anker hat in Ausbildung der Erfindung an seinem vorderen Ende eine Anspitzung über der eine Einkehlung des Schaftes angeordnet ist. Vorteilhaft ausgeformt ist die Erfindung, wenn der Anker durchgehend mit einem Wendel umschlungen ist, der an seinem vorderen, der Ankerspitze zugerichteten Wendelbeginn eine Schneide trägt, die im anfänglichen Wendelverlauf über die Trennwand hinausragt und das Wendel ein sich radial erstreckendes, flächiges Gangprofil aufweist. Eine Ausgestaltung der Erfindung stellt sich dar, wenn der Anker eine größere Längserstreckung seines Schaftes wie die Länge der Ankerkapsel aufweist und in vollständig in die Kapsel eingeführter Lage mit seinem vorderen Teil den Boden der Kapsel überragt. Sinngemäß folgt die Ausbildung der Erfindung, indem die Ankerkapsel mit einer weiteren Ankerkapsel verbunden ist und die so verbundenen Ankerkapseln an ihrer Verbindungsstelle zueinander abgeschirmt sind. Eine pragmatische Varianz der Lösung ist es, daß die Abschirmung aus einer Druckplatte gebildet ist, welche die Kapsel überdeckt, die aus mehreren konzentrisch zueinanderliegenden Kammern, im Sinne der Erfindung mindestens drei Kammern, gebildet ist, wobei die beiden inneren Kammern in der Ausbildung und Lage den Kammern des oberen Kapselteils gleichen, die die Chemikalien einschließen, welche von der äußeren dritten Kammer konzentrisch umschlossen werden. Die äußere Kammer ist mit einem Reaktionsmittel ausgefüllt, das die Sollbruchstellen der Kapsel durchdringend austritt, wobei die die Kapsel trennende Druckplatte gegen das Reaktionsmittel gerichtete Reaktionselemente aufweist, die ringförmig auf der Druckplatte verteilt sind. Die Druckplatte weist dabei in der Erfindung pragmatisch zentrische Sollbruchstellen auf.

Die erfindungsgemäße Lösung erfüllt sich in den Varianten, daß die Reaktionsmittel aus einem Sprengstoff gebildet sind. Auch ist es möglich, diese Mittel aus einer auflösenden Substanz zu bilden, die die Sollbruchstellen und den Basisstoff auflöst bzw. eine ätzende Substanz gebildet sein kann, die nach Initiierung die Sollbruchstellen ätzend öffnet und die Bohrungswand erweitert. Das Reaktionsmittel kann in Varianz der Erfindung aus einer Bakterie gebildet sein, wobei sich als Reaktionselement für den Sprengstoff ein Zünder, für die auflösende Substanz ein chemischer Initiator anbietet und die Bakterien mit einer die Mikroorganismen aktivierende Substanz zur Reaktion gebracht werden.

Die Erfindung ist weiterhin geformt, wenn die Kapselfolge wechselnd in einem direkten Wechsel, Ober- und Unterkapsel, oder in nichtwechselnder Folge in Reihe ausgebildet wird. Der Flansch kann in Ausbildung der Erfindung an seiner Oberseite ein Anschlagmittel aufweisen. Nach Aushärten der Chemikalien an den umschlossenen Flächen des Ankers, ist bei Anwendung der erfindungsgemäßen Ausbildung des Ankers mit Wendeln, die Erfindung ausgestaltet, daß zwischen den Anker- und Wendeloberflächen und den ausgehärteten Chemikalien eine lösbare Verbindung hergestellt ist. Die Erfindung ist weiterhin vorteilhaft ausgefüllt, wenn die Ankerkapsel an ihren Innenflächen der Außenwände horizontal und vertikal verlaufende Nocken aufweist.

Es ist ein Vorteil der Lösung nach der Erfindung, daß ein Verankerungselement aus einer zylinderförmigen Kapsel gebildet ist, die am unteren Ende einen geschlossenen Boden aufweist und am oberen Ende geöffnet ist, wobei die zylindrische Kapsel mit ihrer Außenwand zwei konzentrisch ausgebildete innere Kammern umschließt, die durch eine dünne Trennwand voneinander abgegrenzt sind. In den Kammern sind mindestens zwei Chemikalien angeordnet, von denen jeweils eine mit anderen abhängig oder unabhängig reagiert, wenn sie miteinander zusammengebracht werden. Die Außenwand der Ankerkapsel ist mit Sollbruchstellen versehen, die bei Belastungen in einer vorgesehenen Größe sich zu Öffnungen in der Zylinderwand ausbilden. Die Einrichtung wird durch einen Anker vervollständigt, der durch eine Verschlußöffnung der Ankerkapsel in den Innenraum in axialer Richtung geführt werden kann. Am Schaft des Ankers angeordnete Trennschneiden sind konisch zur Spitze des Ankers verjüngt und überragen in ihrer größten Erstreckung die konzentrisch im Innenraum der Ankerkapsel verlaufenden Trennwände. Die konische Anordnung erlaubt vorteilhaft gemeinsam mit dem Abdichtmaterial an der Öffnung der Ankerkapsel eine genaue Zentrierung des Ankers in der Kapsel und deren konzentrischen Verlauf auf der Längsmittenachse. Beim Einführen des Ankers in die Kapsel zerschneiden die Trennschneiden die Trennwände. Dadurch werden die Chemikalien zusammengeführt und zu einer Reaktion gebracht. Gleichzeitig verdrängt das Volumen des Ankers die reagierenden Chemikalien, die durch den jetzt erhöhten Druck durch die Sollbruchstellen der Kapselwand austreten und in die Hohlräume zwischen der Bohrung und der Kapsel eindringen. Nach vollständiger Einführung des Ankers in die Kapsel, verschließt diese, ein fester Bund aus Abdichtmaterial, sicher die Kapsel gegenüber den jetzt ausreagierenden Chemikalien. Zur Reaktionssicherung ist es möglich, nicht nur einen Druck durch die Verdrängung des Volumens beim Einführen des Ankers zu erreichen, sondern Chemikalien zu benutzen, bei denen zumindest eine Komponente aufschäumt und sein Volumen entsprechend vergrößert. Nach Abschluß der Reaktion der Chemikalien ist die Einrichtung unlösbar mit dem Bauwerkskörper oder einer anderen festen Basis verbunden. Die Verbindung ist dabei form- und kraftschlüssig, weil die Bohrungswände nicht eben, sondern zumindest hohe Rauhtiefen aufweisen und der Schaft des Ankers Einschnürungen trägt, die eine formschlüssige Verbindung zwischen Bohrungswänden und Schaft des Ankers herstellt.

Es ist eine vorteilhafte Ausbildung der Erfindung, wenn der Anker keine dreieckigen, radial ragenden Trennschneiden aufweist, sondern den Ankerschaft ein blattförmiges Wendel umschließt, das in der Nähe der Ankerspitze in eine Schneide endet, die in der Lage ist, die Trennwand in der Ankerkapsel zu zerschneiden. Der Anker wird jetzt mittels einer Drehbewegung in die Ankerkapsel eingeführt. Die Chemikalien sind so ausgebildet, daß sie keine feste Verbindung mit den Blattoberflächen des Wendels sowie des Schaftes eingehen. Nach Abschluß der Reaktion und Einstellen der vollständigen Festigkeit und damit Funktionsfähigkeit der Einrichtung wird in einer vorteilhaften Ausbildung der Erfindung der Anker in eine entgegen der Eindrehbewegung gerichtete Verdrehung versetzt und kann nun aus der erhärteten chemischen Masse der Einrichtung herausgedreht oder weiter hineingedreht werden. Damit ist eine Vielseitigkeit der Anwendbarkeit der Erfindung gegeben, die darin fortgeführt werden kann, daß entsprechend der erfinderischen Lösung, wie vorstehend dargestellt, der Schaft des Ankers weit über die Längserstreckung der Kapsel vergrößert ist und die Aufnahmebohrung in ihrer Tiefenerstreckung größer als die Länge der Kapsel ist. Nach Abschluß der Reaktion kann jetzt der Anker in die Ankerkapsel bis zum Boden gedreht werden. Die Reaktion der Chemikalien wird bis zum Ende abgewartet. Jetzt wird der Anker nicht heraus, sondern den Boden durchstoßend, in den freien Hohlraum unter der Ankerkapsel gedreht, bis der Flansch auf der Kapsel aufliegt.

Vorteilhafterweise entsteht dadurch die Möglichkeit bei einem an die Einrichtung, mit vorgesehenen Anschlagmitteln angelenkten Belastungselement dieses in der Länge zu fixieren, zu spannen, unter Druck zu setzen und seine Belastungen zu graduieren.

Eine weitere vorteilhafte Lösung stellt die Erfindung vor, wenn die Kapsel in zwei quer zur Längsachse verlaufende Kapselteile geteilt ist. Der obere Kapselteil enthält eine Kammer mit der gleichen Ausbildung der bereits erfindungsgemäß dargestellten homogenen Ankerkapsel. Die zweite untere Kammer der Ankerkapsel weist den gleichen Außendurchmesser wie der obere Teil auf und erfüllt die Bedingungen der durchgehenden zylindrischen Form der komplexen Ankerkapsel. Beide Kammern der Kapsel sind durch eine Druckplatte getrennt. Die untere Kammer trägt eine weitere vorteilhaft konzentrisch gebildete Kammer in der Reaktionsmittel ausgebildet sind, die auf die Materialien der Bohrung des Bauwerkes bzw. des Basiskörpers einwirken. Als Reaktionsmittel sind erfindungsgemäß Sprengmittel verschiedenster Art sowie Säuren, Basen und lösende Substanzen sowie für besonders ausgewählte Materialien reagierende Bakterien zum Einsatz zu bringen. Durch den Druck des Ankers auf die Druckplatte werden die Reaktionsmittel, hier der angegebene Sprengstoff zur Einwirkung gebracht. Der Druck des Ankers wird dadurch erzeugt, daß in der oberen Kammer die Reaktion der Chemikalien in einer ersten Stufe abgeschlossen ist und der Anker durch Verdrehen Kräfte erzeugen kann, welche die Druckplatte in Richtung des Kapselbodens bewegen. An ihrer Außenseite sind konzentrisch Reaktionselemente angeordnet, die das Reaktionsmittel zur Wirkung bringen. Im Falle des Sprengstoffes detoniert dieser in einem kurzen heftigen Schlag, der die Wände der Bohrung in der Höhe des Kapselteiles in ihrer Festigkeit und Homogenität beeinflußt. Säuren und Basen als ätzende und auch lösende Substanzen können in ihren für sie typischen Eigenschaften reagieren. Bakterien als Langzeitreaktionsmittel sind bei ausgewählten Anwendungsbeispielen erfindungsgemäß für die kolbenartige Ausbildung des Hinterschnitts geeignet. Zum Auslösen solcher Reaktionen wird der Anker jetzt durch die Druckplatte konzentrisch in die zweite Kapselkammer gedreht und löst die Reaktion der Chemikalien aus, die zum Aushärten gelangen. Im Verlauf der Reaktion und des Hineindrehens des Ankers in den Kapselteil gelangen die Chemikalien der Einrichtung in den durch die Reaktionsmittel jetzt ausgekolkten zylinderförmigen Teil der Bohrung, füllen den jetzt größeren Durchmesser aus und bilden eine kolbenartige Verdickung im Hinterschnitt.

Erfindungsgemäß kann die Stufung der Ankerkapsel mit mehreren Kammern wechselweise fortgeführt werden, um größten Belastungen, vor allem Zugbelastungen, gerecht werden zu können. Auch ist es möglich, die Überlänge des Ankers auszubilden und diesen durch die Kammerteile der Kapsel in einen offenen Teil der Bohrung zu führen.

Die erfindungsgemäße Lösung hat den Vorteil, daß die Einrichtung zur selbsthaltenden Verankerung von Bauelementen in dafür vorgesehene Aufnahmeöffnungen vielgestaltig ausgebildet werden kann. Die Verwendung von Reaktionsmassen, die chemisch reagieren, ihr Volumen vergrößern und mit großen Festigkeitswerten aushärten, erlauben es, eine selbsthaltende Verankerung in vorhandenen oder extra dafür geschaffenen Öffnungen herzustellen.

Die Ausbildung einer kombinierten Form der Anker erlaubt vor allem bei einer großdimensionierten Ausbildung der Verankerungsanordnung die Aufnahme von großen Kräften. Das wird vorteilhafterweise vor allem dadurch möglich, daß durch das Anfügen einer zweiten Ankerkapsel an der Unterseite der normalen Kapsel eine Auskolkung im unteren Bereich der als zylindrischer Hohlraum vorliegenden Bohrung vorgenommen wird und dadurch die Aufnahme von größeren Kräften möglich ist, weil diese Auskolkung, nachdem sie durch die Reaktionssubstanz hergestellt ist, von den selbsthärtenden Chemikalien ausgefüllt und durch die hergestellte Vergrößerung des unteren Teils der Bohrung als Hinterschnitt ein Herausgleiten des Verankerungselementes aus der Bohrung vollständig unmöglich ist. Die Auskolkung kann gemäß der Erfindung vorteilhaft durch Reaktionssubstanzen, wie Sprengstoffe, ätzende und auflösende Substanzen und in äußersten Fällen durch Bakterien, erzeugt werden. Die Auswahl der Reaktionssubstanzen ist abhängig von dem Material der Verankerungsbasis und von der zur Verfügung stehenden Einwirkzeit der Reaktionssubstanz. Vorteilhafterweise wird selbstverständlich bei großformatigen Verankerungen ein Sprengstoff gewählt, der durch Zündung mit der Druckplatte die umgebende Basis zersprengt, den zur Verfügung stehenden Hohlraum vergrößert und dadurch eine wirksame Vergrößerung des Volumens der verfestigten Chemikalien gestattet. Die im unteren Teil der Bohrung hergestellte Ausdehnung des unteren Teils der Verankerung läßt, wie bereits dargestellt, dann ein Herausgleiten der Verankerung aus der Öffnung, ohne eine Zerstörung der Verankerungsanordnung nicht mehr zu.

Diese Variante der erfindungsgemäßen Lösung soll vor allen Dingen bei großformatigen Verankerungseinrichtungen Verwendung finden, die z.B. für eine Verbindung von Seilen für die Abspannung von großen Masten benötigt werden, zum Einsatz gelangen. Hier würden vorteilhafterweise bei einer vorher vorgenommenen Bodenstabilisierung die Blasen in Fortfall kommen können, weil die Verankerungsausbildung nicht an Dimensionierungen gebunden ist. Dem Fachmann ist selbstverständlich die Information zugänglich, daß ein Verankerungsmittel, welches eine Substanz aufweist, die über das Element sowohl zur Kraftaufnahme verfügt als auch die Verbindung dieses Elementes mit der Basis zur Aufnahme der Kräfte selbstreagierend herstellt, von mechanischen Kräften unabhängig ist und vorteilhafterweise über sehr große Längen und Durchmessererstreckungen verfügen kann.

Im Umkehrschluß ist es jedoch auch vorteilhaft bei sehr kleindimensionierten Verbindungselementen, wie dem Halten von Bildern in Bauwerkswänden, die selbstreagierende Dübelverbindung zu verwenden, weil eine einfache und wenig aufwendige Technologie notwendig ist. Es ist festzustellen, daß sowohl bei großdimensionierten als auch bei geringdimensionierten Verbindungen die Herstellung einer selbstherstellenden Verankerung durch den Ablauf von chemischen Reaktionen von mindestens zwei Substanzen, die die Hohlräume im Bereich der Verbindung ausfüllen und dann aushärten, neben der kraftschlüssigen Verbindung eine vollständige, und das ist hier besonders vorteilhaft zu vermerken, formschlüssige Verbindung zwischen Einrichtung und Basis realisieren. Dadurch ist es jetzt erlaubt, die Verbindungseinrichtungen optimal zu dimensionieren, ausreichende Stufungen der Einrichtung herzustellen, und sie den Anforderungen des Bauwerkes anzupassen.

Die Anpassung kann nicht nur in ihrer Größe erfolgen, sondern ist insbesondere damit möglich, daß die Materialien des Ankers und der Ankerkapsel veränderbar sind. Es können Glas, Kunststoff und Stahl Verwendung finden. Die Ankerformen können vielgestaltig sein. Insbesondere jedoch ist ein breites Feld der Variationen auf dem Gebiet der Chemikalienzusammensetzung möglich, welche die Stoffe bestimmen, die für die Reaktion des Ausfüllens Hohlräume der Ankerkapsel sowie der Bohrung notwendig und in Endkonsequenz für die hohe Belastbarkeit der Einrichtung für die Verankerung verantwortlich sind.

So ist es wirkungsvoll, nicht nur zwei Chemikalien zum Aushärten und Volumenvergrößem zur Reaktion zu bringen, sondern es ist denkbar, bedeutend mehr als zwei Chemikalien zur Reaktion zu verwenden, um ganz bewußt bestimmte Festigkeiten, Reaktionsdauer, Anpreßdruck und Ausfüllbarkeit der Hohlräume durch die reagierten Chemikalien zu erreichen. Es versteht sich von selbst, ein gewogenes Mittel zwischen Ankerdimensionierung und den Festigkeitseigenschaften der ausgehärteten chemischen Substanzen zu finden. Es ist auch möglich, mehr als zwei in der Kapsel reagierende Substanzen zu verwenden, um Alterungsprozessen entgegenzuwirken.

Die Anwendung von mehrstufigen Ankerkapseln gestattet es, bei der Verwendung von zylindrischen Aufnahmeöffnungen in den unteren Teil oder in die Mitte der Längserstreckung der Öffnungen Stufungen einzuarbeiten und dadurch den Formschluß zu vergrößern.

Bei der vorteilhaften Verwendung von Sprengstoff als Reaktionssubstanz ist es jetzt gestattet, gestuft die unmittelbare Umgebung zu zerstören und für das Eindringen chemischer Substanzen aufnahmefähig zu machen. Es ist deshalb für den Fachmann jetzt auch die Information eröffnet, daß er als Reaktionssubstanzen Sprengstoff und Säure als Zünder kombiniert verwenden können. Bei Einführung in die Verankerungsöffnung wirkt der Sprengstoff zertrümmernd und die Säure zersetzend, wobei auch eine umgekehrte Reaktionsreihenfolge möglich ist.

Vorteilhafterweise kann mit der Ausbildung der Stufen in der Ankerkapsel, die gemeinsam eine zylindrische Form des Gesamtankers ausbilden, durch das Einbringen von Initialzündungen von außen, bei vorrangig großformatigen Verankerungseinrichtungen, eine vielstaltige Veränderung der Verankerungswandung der Bohrung erreicht werden. Der Vorteil unterstreicht weitestgehend die erfinderische Leistung noch damit, daß in den Innenflächen der Ankerkapsel wechselnd mit den Sollbruchstellen Nocken angeordnet sind, die insbesondere bei der Verwendung der Ankerkapsel für einen wendelartig ausgebildeten Anker, der durch eine Drehbewegung in den ausgehärteten Chemikalien sich mit den Oberflächen lösend achsial bewegen kann, die ausgehärtete Füllung gegen ein Verdrehen in der Kapsel unterstützt wird. Durch die Nocken ist eine achsiale und radiale Arretierung in der Kapsel gesichert, zumal die reagierten Chemikalien die Sollbruchstellen durchdrungen, den Hohlraum zwischen Kapsel und Bohrungswand ausgefüllt haben und eine kraft- und formschlüssige, komplexe Verbindung der gesamten Einrichtung erzeugt ist. Das ist dann vorteilhaft, wenn an dem Anker Belastungselemente angeordnet sind, die eine steigende Belastung in die Einrichtung eintragen.

Die Erfindung soll anhand eines Ausführungsbeispieles näher erläutert werden. In der zugehörigen Zeichnung zeigen:
- Fig. 1:: Die Einrichtung im Schnitt mit eingeführtem Anker,
- Fig. 2:: Die Einrichtung nach Fig. 1 im Schnitt mit einer anderen Ankerausbildung,
- Fig. 3:: Die Ausbildung gemäß Fig. 2 mit einem verlängerten Hohlraum
- Fig. 4:: Die Einrichtung wie Fig. 1 und 2 im Schnitt mit einer mehrstufigen Ankerkapselausbildung mit einem teilweise eingeführten Anker
- Fig. 5:: Die Ankerkapsel mit eingearbeiteten Sollbruchstellen und Haltenocken.

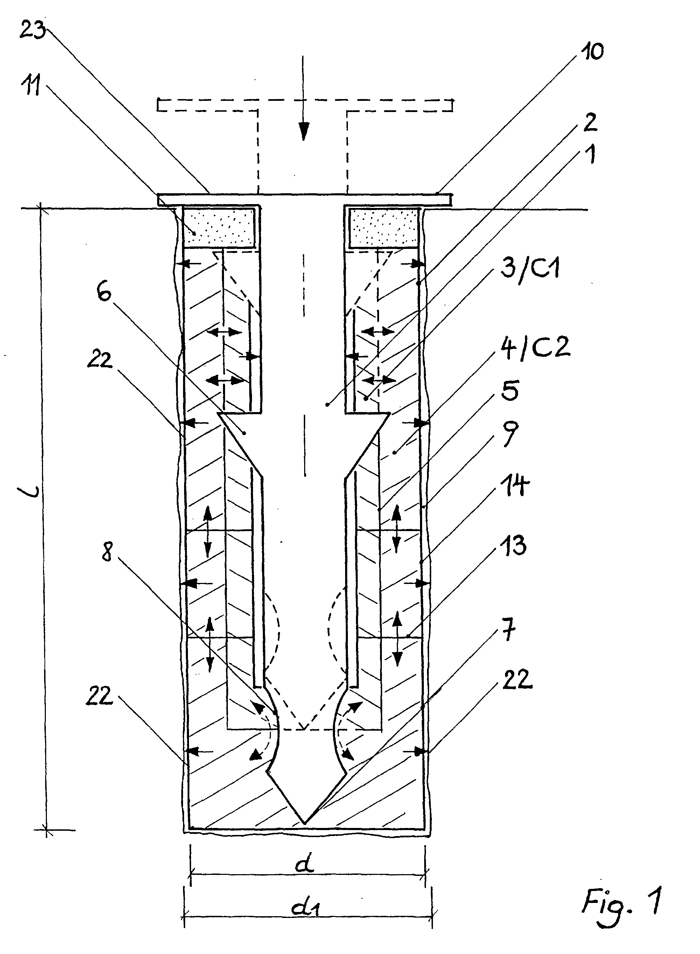

Fig. 1 zeigt die Einrichtung in einem Hohlraum 9 mit dem Durchmesser d1, der eine Bohrung bzw. eine Öffnung sein kann und der Länge L einer Ankerkapsel 2 entspricht. Die Ankerkapsel 2 hat den Durchmesser d und ist bis zum Grund des Hohlraums 9 eingeführt. Es ist zweckdienlich, daß die Differenz zwischen d und d1 gering ist, um größere Zwischenräume zu vermeiden. Die äußere Wand der Ankerkapsel 2 ist mit Sollbruchstellen 22 versehen, die in Längs- und Querrichtung der Wand der Ankerkapsel 2 angeordnet sind. In der Ankerkapsel 2 sind eine innere Kammer 3 und eine äußere Kammer 4 konzentrisch eingeordnet. In den Kammern 3;4 sind Chemikalien C1;C2 enthalten und durch eine Trennwand 5 voneinander getrennt, damit die Chemikalien nicht zusammengebracht sind und nicht unkontrolliert miteinander reagieren können. Zentrisch in die Ankerkapsel 2 einführbar ist ein Anker 1 vorgesehen, der überdeckend mit der Längsmittenachse der Ankerkapsel 2 bewegbar ist. Der Anker 1 ist weitestgehend symmetrisch, wobei auf seinem Umfang mindestens zwei Trennschneiden 6, vorteilhafterweise sich gegenüberliegend, angeordnet sind. Die Trennschneiden 6 befinden sich im vorderen Bereich des Schaftes der Ankerkapsel 2 über Einschnürungen 8, die in eine Spitze 7 des Schaftes des Ankers 1 übergehen. Die Trennschneiden 6 ragen mit ihren äußeren Schneidenenden über die Trennwand 5 hinaus.

Nach dem Einführen der Ankerkapsel 2 in den Hohlraum 9 und Bestimmen seiner Lage wird der Anker 1 in ein Abdichtmaterial eingeführt, das an der Öffnung der Ankerkapsel 2, diese verschließend, eingeordnet ist. Das Abdichtmaterial 11 ist ringförmig und seine Ringöffnung der Größe des Schaftes des Ankers 1 angepaßt. Der Anker 1 wird in die ringförmige Öffnung des Abdichtmaterials eingeführt und entlang der Längsmittenachse der Ankerkapsel 2 mit seiner Spitze 7 dem Boden der Ankerkapsel 2 entgegenbewegt. Die Trennschneiden 6 durchtrennen das weiche Abdichtmaterial 11 und bei einer Weiterbewegung die Trennwand 5 zwischen den Kammern 3;4. Dadurch werden die Chemikalien C1;C2 zusammengebracht und können, wie vorgesehen, reagieren. Die erste gewollte Reaktion ist eine Vergrößerung des Gesamtvolumens der Chemikalien. Dabei ist nicht zu vernachlässigen, daß der Anker 1 mit seinem Eigenvolumen die Chemikalien C1;C2 verdrängt und in der Kapsel 2 unter Druck setzt. Diese pressen sich durch die Sollbruchstellen 22 in den Hohlraum 9 und füllen die Differenz zwischen d und d1 aus. Zum Auffangen des Druckes, der die reagierenden Chemikalien C1;C2 aus der oberen Öffnung der Ankerkapsel 2 drücken würde, ist der Anker 1 mit einem Flansch 10 versehen, der jetzt nach vollständig eingedrücktem Anker 1 die Öffnung durch seinen größeren Durchmesser überdeckt und verschließt. Eine zusätzliche Halterung erfährt der Anker 1 durch die Einschnürungen 8 auf dem Schaft des Ankers 1, in welche die sich ausdehnenden Chemikalien C1;C2 eindringen. Die Reaktionsgeschwindigkeit kann durch eine entsprechende Gattierung der Chemikalien C1;C2 erreicht werden, nach deren Verlauf die vermischten Chemikalien aushärten und sich jetzt durch Anpassung an die Oberflächenstruktur des Hohlraums 9 kraft- und formschlüssig mit dem Anker 1 verbinden.

Es ist dem Fachmann jetzt klar, daß am Kopfende des Ankers 1 im Bereich des Flansches 10 geeignete Verbindungselemente angeordnet werden können, die eine sinnvolle Verbindung für die Aufnahme von Horizontal- und Vertikalkräften sowie deren Komponenten gestatten. Es ist dem Fachmann auch an die Hand gegeben, den Schaft des Ankers 1 zu verlängern. Das ist dann notwendig, wenn sich die Belastungsart in den Bereichen von Momenten bewegt. Ihm ist dann klar, daß er die Chemikalien C1;C2 in ihren Anteilen so zu wählen hat, daß eine große Festigkeit und Elastizität der ausgehärteten Chemikalien C1;C2 erreicht wird.

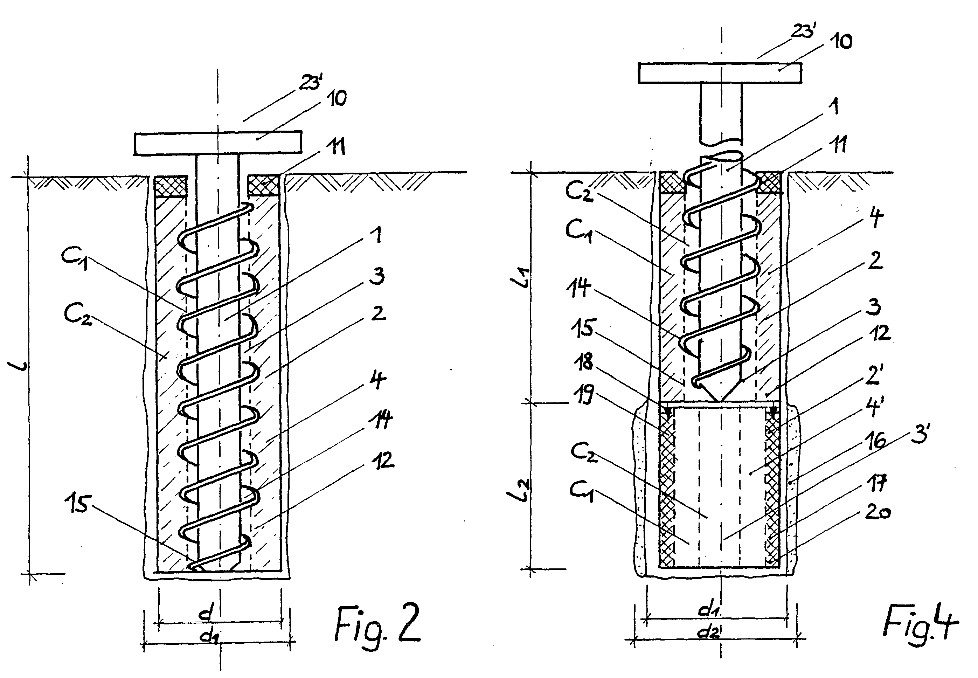

Die Figuration der Einrichtung gemäß Fig. 1 läßt erkennen, daß eine unlösbare Verbindung zwischen Basis und Ankerkapsel 2 über den Hohlraum 9 und des Ankers 1 erreicht worden ist. Das kann in Anwendungsfällen ungünstig sein, so daß die Erfindung in Fig. 2 eine Variation vorstellt, die eine lösbare Verbindung des Ankers 1 gestattet. Hier ist sinnvollerweise ein Wendel 14 gewählt worden, das sich flächig um den Schaft des Ankers 1 schlingt. Das Wendel 14 hat im vorderen Bereich eine Schneide 15, welche in der Art wie gemäß Fig. 1 die Trennwand 5 der Kammern 3;4 durchschneidet. Die Reaktion der Chemikalien C1;C2 und die Herstellung der Haltefunktion der Einrichtung erfolgt analog dem Vorgang in Fig. 1. Durch die Verwendung des Wendels 14 ist es möglich, den Anker 1 durch eine Rotationsbewegung entgegen seiner Wendelsteigung aus der Ankerkapsel 2 herauszudrehen. In den ausgehärteten Chemikalien C1;C2 ist jetzt ein Gewinde ausgebildet worden, das die Bewegung und Wiederaufnahme des Ankers 1 in der Kapsel 2 gestattet.

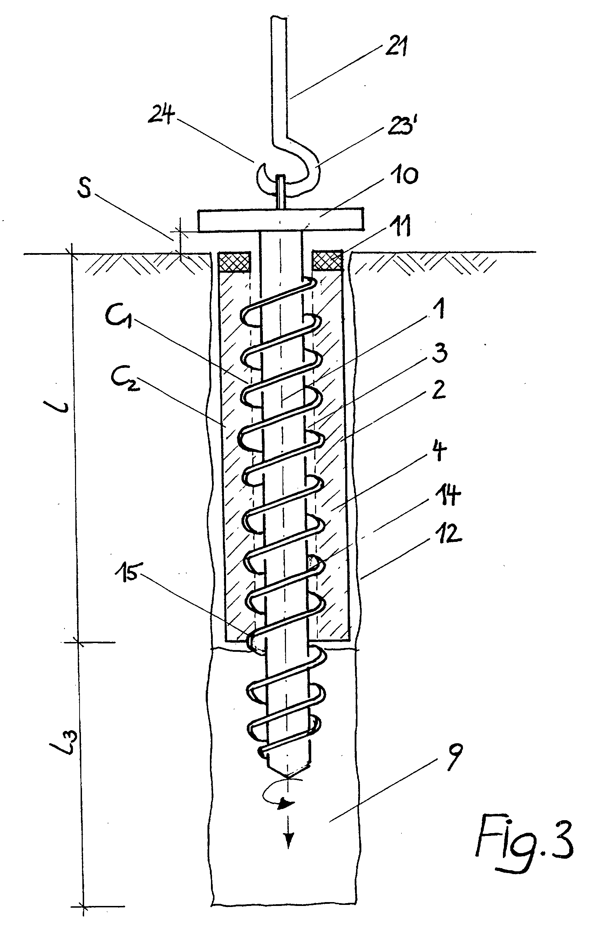

Die Fig. 3 stellt eine Variation der Ausbildung gemäß Fig. 2 vor. Hier ist der Hohlraum 9 um die Länge L3 erstreckt und wird nicht von der Ankerkapsel 2 ausgefüllt. Nach Abschluß des Vorganges, wie in Fig. 2 dargestellt, ist es jetzt möglich, den Anker 1 um die Länge L3 zu vergrößern, durch den Boden der Ankerkapsel 2 zu stoßen und den Anker 1 in den Bereich des Hohlraumes 9 unter der Kapsel zu bewegen zu bewegen. Dadurch ergibt sich der vorteilhafte Effekt, daß mit einer Verdrehung des Ankers 1 eine Spannkraft in dem anhängenden Element erzeugt werden kann und bei mehrfachen Drehungen die Spannung beliebig vergrößerbar ist. Das macht sich dann vorteilhaft bemerkbar, wenn die Befestigungseinrichtung zum Halten von Verspannungen, wie der Seilverspannungen von Masten, Seilbahnen o.ä. Einrichtungen, Verwendung finden soll. Dafür ist an der Oberseite des Flansches 10 ein entsprechendes Anschlagmittel 24 angeordnet.

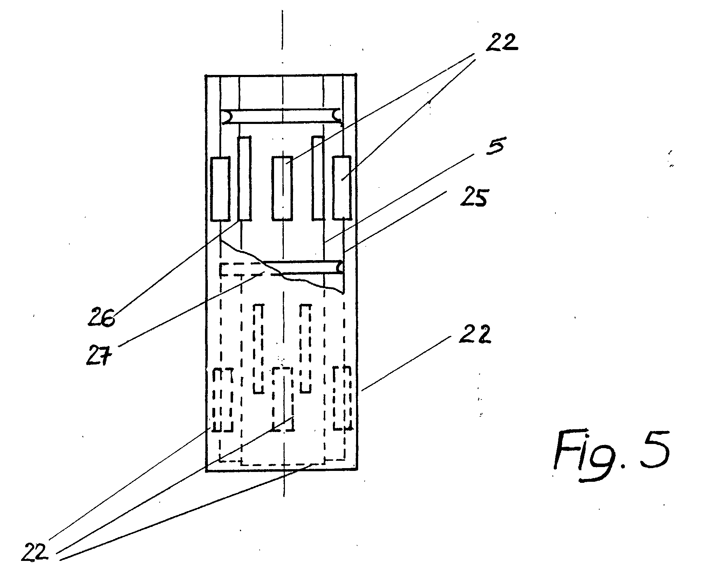

Fig. 4 zeigt die Anordnung ähnlich wie die Figuren 1 und 2, jedoch ist hier die Ankerkapsel 2 zweistufig ausgebildet. Die Ankerkapsel 2 trägt in ihrem unteren Bereich eine weitere Ankerkapsel 2', die in ihrem äußeren Bereich konzentrisch eine ringförmige Kammer 20 aufweist, in der ein Reaktionsmittel 17 eingelagert ist. Der obere Teil der Kapsel 2 ist äquivalent dem der Kapsel 2 gemäß Fig. 2 ausgebildet. Diese Ausbildung setzt sich auch im inneren Bereich der Ankerkapsel 2' fort. Zwischen den Anker-kapseln 2;2' ist eine Druckplatte 18 angeordnet, die in ihren Außenbereichen Reaktionselemente 19 trägt, die der Kammer 20 entgegengerichtet sind. Die Funktionseinordnung der Ankerkapseln 2;2' erfolgt jetzt zweistufig. Die Ankerkapseln 2;2' werden in den Hohlraum 9 eingeordnet und überdecken die Länge L des Hohlraumes 9 mit den Längen L1;L2. In die Ankerkapsel 2 wird in bereits dargestellter Art und Weise der Anker 1 eingeführt und bringt nach Erreichen der Druckplatte 18 in der Tiefe L1 die Chemikalien C1;C2 zur Reaktion. Dabei wird die Druckplatte 18 durch den Anker 1 nicht belastet.

Nach Aushärtung der Chemikalien C1;C2 und vollständigem Festsetzen der Kapsel 2 in dem Bereich L1 des Hohlraumes 9 wird der Anker 1 verdreht und drückt die Druckplatte 18 auf die Kammer 20. Die Reaktionselemente 19 aktivieren das Reaktionsmittel 17 in der Kammer 20, die die Auskolkung 16 über die Länge L2 herstellen, wobei jetzt der Hohlraum 9 um die Differenz von d1 zu d2 vergrößert wird. Die Auskolkung 16 entsteht und durch das Eindringen des Ankers 1 über die Druckplatte 18 hinaus. Damit wird die Reaktion der Chemikalien C1;C2 in der Ankerkapsel 2' initiiert, in deren Verlauf die Chemikalien C1;C2 bei ihrer Volumenvergrößerung oder -verdränung in die Auskolkung 16 eindringen, eine kolbenartige Vergrößerung erzeugen und danach aushärten. Nach Erreichen eines homogenen Aushärtungsgrades kann der Anker 1 gemäß der Fig. 2 Verwendung finden. Es ist selbstverständlich möglich, die Ausbildung gemäß Fig. 4 so zu setzen, daß der Anker 1 nach Fig. 1 Verwendung finden kann. Ausgestaltend, und hier sieht der Fachmann die Erfindung ausgebildet, kann die Ankerkapsel 2' in Absätzen mehrere Male ausgebildet sein, um eine Vielzahl von Auskolkungen 16 herzustellen. Weiterhin ist es erfindungsgemäß, die Ausbildung nach Fig. 3 mit einem verlängerten Anker 1 auf die Ausbildung gemäß Fig. 4 zu übertragen.

Die Fig. 5 zeigt eine Ausbildung der Ankerkapsel 2. In der Ankerkapsel 2 sind horizontal und vertikal verlaufende Sollbruchstellen 22 eingeordnet. Die Innenflächen 25 der Ankerkapsel 2 tragen Nocken 26;27, die ein eigenständiges Verdrehen und ein Abscheren der kraft- und formschlüssigen Verbindung an den Wänden der Kapsel 2 verhindern sollen und dazu geeignet sind, größere axiale Zugkräfte in den Anker einzuleiten.

### Aufstellung der verwendeten Bezugszeichen

- C1;C2: Chemikalien
- d;d1;d2: Durchmesser
- s: Spannweg
- L;L1;L2;L3: Länge

- 1: Anker
- 2;2': Ankerkapsel
- 3;3': Kammer
- 4;4': Kammer
- 5: Trennwand
- 6: Trennschneide
- 7: Anspitzung
- 8: Einschnürung
- 9: Hohlraum
- 10: Flansch
- 11: Abdichtmaterial
- 12: Substanz
- 13: Haltestege
- 14: Wendel
- 15: Schneide
- 16: Auskolkung
- 17: Reaktionsmittel
- 18: Druckplatte
- 19: Reaktionselement
- 20: Kammer
- 21: Verbindungselement
- 22: Sollbruchstelle
- 23: Oberseite
- 24: Anschlagmittel
- 25: Innenfläche
- 26;27: Nocke

## Patentansprüche

1. Einrichtung zum selbsthaltenden Verankern von Bauelementen in Aufnahmeöffnungen, bestehend aus einer Ankerkapsel (2;2') und einem in die Kapsel einfügenden Anker (1), die nach Einführen in die Aufnahmeöffnung in eine Verankerungsposition gebracht werden und sich mit den Wandungen der Aufnahmeöffnung zur Aufnahme von horizontal und vertikalen Kräften schlüssig verbinden, wobei die Ankerkapsel (2;2') durch eine Trennwand gebildete Kammern (3;4;20) aufweist, in denen Chemikalien (C1;C2) und Reaktionsmittel (17) getrennt voneinander eingelagert sind und der Anker (1) in die Ankerkapsel (2;2') einführbar und in einer zentrischen Lage der Mittelachsen der Ankerkapsel (2;2') gehalten werden kann, schneidemittel (6;15) zum Zerstören der Trennwand (5) aufweist, damit die Chemikalien (C1;C2) sich vermischend zur Reaktion gebracht werden können und Sollbruchstellen in der Ankerkapsel (2) zum Durchtreten der reagierenden Chemikalien (C1;C2) und zum Ausfüllen eines Hohlraumes (9) vorgesehen sind, so dass nach einem Erstarren der Chemikalien (C1;C2) ein kompakter, die Wände des Hohlraumes (9) sowie den Anker (1) kraft- und formschlüssig verbindender Körper ausgebildet ist.

2. Einrichtung nach Anspruch 1, **dadurch gekennzeichnet, dass** Schneidemittel, sich radial gegenüberliegend, auf dem Schaft des Ankers (1) angeordnet, fahnenartig herausragend, keilförmig ausgebildet, mit der Trennschneide (6) dem Keilverlauf folgend nach außen verlaufend, mit ihrer Erstreckung die radiale Erstreckung der Trennwand (5) überragend, vorgesehen sind.

3. Einrichtung nach Anspruch 1, **dadurch gekennzeichnet, dass** die Länge des Ankers (1) mit der inneren Länge (L) der Ankerkapsel (2) gleich ist.

4. Einrichtung nach Anspruch 1, **dadurch gekennzeichnet, dass** die Sollbruchstellen (22) gegenüber der Wandstärke der Außenwand der Ankerkapsel (2) eine Verdünnung auf 0,01 bis 0,5 mm aufweisen.

5. Einrichtung nach Anspruch 1 und 4, **dadurch gekennzeichnet, dass** die Sollbruchstellen (22) in vertikalen und radialen Abständen verteilt in der Ankerkapsel (2) eingeordnet sind.

6. Einrichtung nach Anspruch 1, **dadurch gekennzeichnet, dass** der Anker (1) an seinem vorderen Ende eine Anspitzung (7) hat, über der eine Einkehlung (8) verläuft.

7. Einrichtung nach Anspruch 1, **dadurch gekennzeichnet, dass** der Anker (1) durchgehend mit einem Wendel (14) umschlungen ist, das an seinem vorderen, der Ankerspitze (7) zugerichteten Wendelbeginn eine Scheide (15) aufweist, die im anfänglichen Wendelverlauf über die Trennwand (5) hinausragt.

8. Einrichtung nach Anspruch 7, **dadurch gekennzeichnet, dass** das Wendel (14) ein sich radial erstreckendes, flächiges Gangprofil aufweist.

9. Einrichtung nach Anspruch 7, **dadurch gekennzeichnet, dass** das Wendel (14) nicht durchgehend umlaufend auf dem Anker (1) angeordnet ist.

10. Einrichtung nach Anspruch 1, **dadurch gekennzeichnet, dass** der Anker (1) eine größere Längserstreckung seines Schaftes wie die Länge (L) der Ankerkapsel (2) aufweist und in vollständig in die Kapsel (2) eingeführter Lage mit seinem vorderen Teil den Boden der Kapsel (2) überragt.

11. Einrichtung nach Anspruch 1, **dadurch gekennzeichnet, dass** die Ankerkapsel (2), mit einer weiteren Ankerkapsel (2') verbunden ist und die Ankerkapseln (2;2') an der Verbindungsstelle der Kapseln (2;2') zueinander abgeschirmt sind.

12. Einrichtung nach Anspruch 11, **dadurch gekennzeichnet, dass** die Abschirmung aus einer Deckplatte (18) gebildet ist, welche die weitere Kapsel (2') überdeckt, die aus mindestens drei konzentrisch zueinander liegenden Kammern (3';4';20) gebildet ist, wobei die beiden inneren Kammern(3';4') in der Ausbildung und Lage den Kammern (3;4) der oberen Kapsel (2) gleichen, die Chemikalien (C1;C2) einschließen, und von der äußeren Kammer (20) konzentrisch umschlossen werden, welche mit einem Reaktionsmittel (17) gefüllt ist, das durch die Sollbruchstellen (22) austritt und dass die Druckplatte (18) gegen Reaktionsmittel (17) gerichtete Reaktionselemente (19) aufweist, die ringförmig auf der Druckplatte (18) verteilt sind.

13. Einrichtung nach Anspruch 12, **dadurch gekennzeichnet, dass** die Druckplatte (18) zentrische Sollbruchstellen aufweist.

14. Einrichtung nach Anspruch 12, **dadurch gekennzeichnet, dass** das Reaktionsmittel (17) ein Sprengstoff ist.

15. Einrichtung nach Anspruch 12, **dadurch gekennzeichnet, dass** das Reaktionsmittel (17) aus einer auflösenden Substanz gebildet ist.

16. Einrichtung nach Anspruch 12, **dadurch gekennzeichnet, dass** das Reaktionsmittel (17) aus einer ätzenden Substanz gebildet ist.

17. Einrichtung nach Anspruch 12, **dadurch gekennzeichnet, dass** das Reaktionsmittel (17) aus Bakterien gebildet ist.

18. Einrichtung nach Anspruch 12 und 14, **dadurch gekennzeichnet, dass** das Reaktionselement (19) ein Zünder ist.

19. Einrichtung nach Anspruch 12 und 15, **dadurch gekennzeichnet, dass** das Reaktionselement (19) ein chemischer Initiator ist.

20. Einrichtung nach Anspruch 12 und 17, **dadurch gekennzeichnet, dass** das Reaktionselement (19) eine die Mikroorganismen aktivierende Substanz ist.

21. Einrichtung nach Anspruch 12 und einem oder mehreren der folgenden Ansprüche, **dadurch gekennzeichnet, dass** untere Kapseln (2) in Reihe verbunden sind.

22. Einrichtung nach Anspruch 1 und einem oder mehreren der folgenden Ansprüche, **dadurch gekennzeichnet, dass** der Flansch (10) an seiner Oberseite (23') ein Anschlagmittel (24) aufweist.

23. Einrichtung nach Anspruch 7 und einem oder mehreren der folgenden Ansprüche, **dadurch gekennzeichnet, dass** mit den Chemikalien (C1;C2) nach erfolgtem Aushärten an den umschlossenen Flächen des Ankers (1) eine lösbare Verbindung hergestellt ist.

24. Einrichtung nach Anspruch 1 und einem oder mehreren der folgenden Ansprüche, **dadurch gekennzeichnet, dass** die Ankerkapsel (2;2') an ihren Innenflächen (25) der Außenwände, horizontal und vertikal verlaufende Nocken (26;27) aufweist.

## Claims

1. Facilities to self establish of construction elements into monting openings, existing from an anchor capsule for 2; 2') and one into the capsule of inserting anchors (1),
and one into the capsule of inserting anchors (1) this one after introduce himself be taken to an anchorage position into the monting opening and kontact with the Wal of the monting opening for the horizontal and vertical strengths conclusively,
the anchor capsule shows 2 chambers formed by a partition wall (3, 4, 20) in witch the chemicals (C1;C2) and reaction chemikal (17) separate are stored by each other and the anchor (1) into the anchor capsule (2; 2) Insertable in a centric position of the middle axes of the anchor capsule (2;2') be held for one leading bar, cutting head (6;15) for destroying the partition wall (5) ), for 15 so that the chemicals (C1;C2) can be taken to the reaction mixing, and rupture joints in the anchor capsule (2) for diffusion on the reacting chemicals; and for filling out a cavity (9) so that after stiffening of the chemicals (C1;C2) the walls for the cavity (9) as well as the anchor (1)) are komplet connected- is fully taken up with.

2. Facilities according to claim 1, indicated which, that blade means ordered on the shaft of the anchor (1), facing each other radially, project rise wedge shaped trained, with the separating blade (6), following the wedge course getting lost to the outside, complete partition outstanding.

3. Facilities according to claim 1, **indicated by it that** the length of the anchor (1) with the inner length (of) 1 of the anchor capsule (2) is same.

4. Facilities according to claim 1, **indicated by it that** the rupture joints (22) show a rarefaction opposite the wall thickness of the outer wall of the anchor capsule (2) on 0.01 to 0.5 mm.

5. Facilities according to claim 1 and 4, **indicated which, that** the rupture joints (22) are put in order in vertical and radial separations distributed in the anchor capsule (2).

6. facilities according to claim 1, **indicated which, that** the anchor (1) on his front end has an peak (7) over which an notch thinning (8) goes.

7. Facilities according to claim 1, **indicated which, that** the anchor (1) is twined around spiral (14) with one throughout, this at his one at the front one anchor- spire with wall above partition projekt rise.

8. Facilities according to claim 7, **indicated which, that** spiral (14) shows a walk profile for ace which is radially extending and flat for it.

9. Facilities according to claim 7, **indicated which, that** spiral (14) isn't the ordered throughout circulatingly on the anchor (1).

10. Facilities according to claim 1, **indicated which, that the** anchor (1) shows a larger length of his shaft like the length ofof the anchor capsule (2) and in position introduced to the capsule (2) completely with his front part the bottom of the capsule (2) towers above.

11. Facilities according to claim 1, indicated which, that the anchor capsule (2) is, with another anchor capsule obliged; in the connection place of the capsules (2;2) and the anchor capsules is protected to each other.

12. Facilities according to claim 11, **indicated which, that** shielding is formed the from a slab (18), which one covers the further capsule (2), the chambers lying to each other concentrically from at least three are formed (3;4;20), the two inner chambers in which (3;4) in the education and position the chambers (3;4) be like the upper capsule (2), the chemicals (C1;C2) includes and concentrically enclosed of the outer chamber (20); which one is filled with a cleaning agent (17), this by the rupture joints (22) treads, the printing plate (18) aimed at reaction means (17) and that reaction elements (19) on-wise, is distributed this one on the printing plate (18) ring-likely.

13. Facilities according to claim 12, **indicated which, that** that the printing plate (18) shows centric rupture joints.

14. Facilities according to claim 12, **indicated which, that** the reaction means (17) is an explosive.

15. Facilities according to claim 12, **indicated which, that** reaction means (17) made of a dissolving substance is formed the.

16. Facilities according to claim 12, **indicated which, that** reaction means (17) made of a corrosive substance is formed the.

17. Facilities according to claim 12, **indicated which, that** reaction means (17) is formed the from bacteria.

18. Facilities according to claim 12 and 14, **indicated which, that** the reaction element (19) is an igniter.

19. Facilities according to claim 12 and 15, **indicated which, that** the reaction element (19) is a chemical initiator.

20. Facilities according to claim 12 and 17, **indicated which, that** the reaction element (19) is a substance activating the microorganisms.

21. Facilities according to claim 12 and one or several of the following claims, **indicated which, that** lower capsules (2) are connected in row.

22. Facilities according to claim 1 and one or several of the following claims, **indicated which, that** for for one that the flange (10) at his top side (23) for stop.

23. Facilities according to claim 7 and one or several of the following claims, **indicated which, that** with the chemicals; (C;C2) after been carried out end hardnesses made a detachable connection at the enclosed areas of the anchor (1) exist.

24. Facilities according to claim 1 and one or several of the following claims show 2, **indicated which, that** the anchor capsule (2;2) shows Nocken going at her insides (25) of the outer walls, horizontal and vertical (26 ;27).

## Revendications

1. Dispositif d'ancrage permettant l'autofixation d'éléments de construction dans une ouverture de fixation et se composant d'une capsule (2;2') et d'une tige d'ancrage (1) à introduire dans la capsule, qui après la mise en place dans l'ouverture de la fixation, seront ramener en position d'ancrage et se fixeront aux parois de l'ouverture afin de neutraliser les forces verticales et horizontales.
En sachant que :
- la capsule (2;2') se compose de petites chambres (3;4;20) formées par une cloison, dans
- lesquelles des composants chimiques (C1;C2) séparés d'un agent réactif (17) sont stockés.
- la tige d'ancrage (1) introduite dans la capsule (2;2') peut être fixée au milieu de l'axe central de cette dernière (2;2').
- un organe tranchant (6;15) détruit la cloison (5) afin que la réaction chimique entre les agents (C1;C2) puisse s'effectuer.
- des sections de rupture sont intentionnellement prévues dans la capsule d'ancrage (2) afin de permettre au mélange chimique (C1;C2) de traverser, et ainsi de remplir la cavité (9).De telle façon, après la solidification du mélange chimique (C1;C2), un corps compact se forme par adhérence et emboîtement avec les parois de la cavité (9) et la tige d'ancrage (1).

2. Dispositif identique à la prétention 1, **caractérisé par le fait que** l'organe tranchant se positionne devant de façon radiale sur la verge de la tige d'ancrage (1), qu'il est pointé comme un drapeau et formé en coin, et dont la lame (6) part vers l'extérieur en suivant le coin et qui une fois étirée dépasse l'étirement radial de la cloison (5).

3. Dispositif identique à la prétention 1, **caractérisé par le fait que** la longueur intérieure (L) de la capsule (2) et celle de la tige d'ancrage (1) sont identiques.

4. Dispositif identique à la prétention 1, **caractérisé par le fait que** les sections de rupture (22) montre un amincissement par rapport à l'épaisseur des parois extérieures de la capsule d'ancrage (2), compris entre 0,01 et 0,5 mm.

5. Dispositif identique aux prétentions 1 et 4, **caractérisé par le fait que** les sections de ruptures (22) sont placées suivant des écarts répartis, de façon radiale et verticale, dans la capsule d'ancrage (2).

6. Dispositif identique à la prétention 1, **caractérisé par le fait que** la tige d'ancrage (1) possède une pointe (7) sur son extrémité avant, sur laquelle se trouve une mortaise (8).

7. Dispositif identique à la prétention 1, **caractérisé par le fait que** partant de l'extrémité de la tige d'ancrage (7), une spirale (14) est enroulée en continue tout le long de cette dernière (1). A l'extrémité de la spirale se trouve un fourreau (15), qui dépasse de la cloison (5) lorsque la spirale se trouve en position initiale.

8. Dispositif identique à la prétention 7, **caractérisé par le fait que** la spirale (14) en s'étirant dans le sens radial, possède un profile plat et en long.

9. Dispositif identique à la prétention 7, **caractérisé par le fait que** la spirale (14) ne s'enroule pas en continue autour de la tige d'ancrage (1).

10. Dispositif identique à la prétention 1, **caractérisé par le fait qu'**une fois la tige d'ancrage (1) étirée, la longueur de sa verge est plus grande que celle (L) de la capsule d'ancrage (2).Une fois complètement introduite dans la capsule (2), l'extrémité avant de la tige d'ancrage dépasse le fond de la capsule (2).

11. Dispositif identique à la prétention 1, **caractérisé par le fait que** la capsule d'ancrage (2) est reliée à une autre capsule d'ancrage (2') et que ces dernières (2;2') sont à leur jonction isolée l'une de l'autre (2;2').

12. Dispositif identique à la prétention 11, **caractérisé par le fait que** l'isolation s'effectue à l'aide d'une contre-plaque (18) qui recouvre l'autre capsule (2') constituée d'au moins 3 chambres (3';4';20) concentrées les unes avec les autres.
En sachant que :
- les deux chambres intérieures (3';4') de la capsule inférieure sont formées comme celles (3 ;4) de la capsule supérieure (2), contiennent toutes les agent chimiques (C1;C2) et sont entourées de façon concentrée par les chambres extérieures (20).Ces dernières sont remplies avec un agent réactif (17), lequel s'échappe par les sections de rupture (22).
- la contre-plaque (18) comprend un élément réactif (17) destiné aux agents réactifs (19), lesquels sont répartis en cercle sur la contre-plaque (18).

13. Dispositif identique à la prétention 12, **caractérisé par le fait que** la contre-plaque (18) est centrée par rapport aux sections de rupture.

14. Dispositif identique à la prétention 12, **caractérisé par le fait que** l'agent réactif (17) est un explosif.

15. Dispositif identique à la prétention 12, **caractérisé par le fait que** l'agent de réactif est formé à base d'un dissolvant.

16. Dispositif identique à la prétention 12 ; **caractérisé par le fait que** l'agent réactif est formé à base d'une substance corrosive.

17. Dispositif identique à la prétention 12 ; **caractérisé par le fait que** l'agent réactif (17) est formé à base de bactéries,

18. Dispositif identique aux prétentions 12 et 14, **caractérisé par le fait que** l'élément réactif (19) est une amorce

19. Dispositif identique aux prétentions 12 et 15, **caractérisé par le fait que** l'élément réactif (19) est un initiateur chimique.

20. Dispositif identique aux prétentions 12 et 17, **caractérisé par le fait que** l'élément réactif (19) est une substance activant les micro-organismes.

21. Dispositif identique à la prétention 12 ainsi qu'à une ou plusieurs prétentions suivantes, **caractérisé par le fait que** les capsules inférieures (2) sont assemblées en série.

22. Dispositif identique à la prétention 1 ainsi qu'à une ou plusieurs prétentions suivantes, **caractérisé par le fait que** sur la partie supérieure (23) du collet (10) se trouve un dispositif (24) d'attache.

23. Dispositif identique à la prétention 7 ainsi qu'à une ou plusieurs prétentions suivantes, **caractérisé par le fait que** la fixation provoquée par le durcissement des composants chimiques (C1;C2) sur les surfaces enlacées de la tige d'ancrage (1) peut être défaite.

24. Dispositif identique à la prétention 1 ainsi qu'à une ou plusieurs prétentions suivantes, **caractérisé par le fait que** les capsules d'ancrage (2;2') présentent le long des surfaces intérieures (25) de leurs parois, un bossage (26;27) vertical et horizontal.
